# EUROPEAN PATENT SPECIFICATION

(11) **EP 4 100 595 B1**
(45) Date of publication and mention of the grant of the patent: **15.01.2025**
(21) Application number: 21705251.3
(22) Date of filing: 05.02.2021
(51) Int. Cl.: E04C 3/08, E04C 3/40, E04B 1/342, E04B 1/24, E04C 3/04, E04G 21/24, E04G 21/28, E04B 1/35

(54) **MODULAR STRUCTURE FOR PROVIDING ON-SITE PROTECTION**
MODULARE STRUKTUR ZUM BEREITSTELLEN VON SCHUTZ VOR ORT
STRUCTURE MODULAIRE PERMETTANT DE FOURNIR UNE PROTECTION SUR SITE

(30) Priority: 06.02.2020 GB 202001631
(43) Date of publication of application: 14.12.2022
(60) Divisional application: 24217529.7
(73) Proprietor: Bam Nuttall Limited, Camberley, Surrey GU15 3XW (GB)
(72) Inventor: PROTHERO, John, Camberley, Surrey GU15 3XW (GB)
(74) Representative: Reddie & Grose LLP
(86) International application number: PCT/GB2021/050256
(87) International publication number: WO 2021/156625

(56) References cited:
- AU-B2- 2015 295 620
- CN-A- 110 259 162
- CN-A- 110 259 162
- FR-A1- 2 538 428
- FR-A1- 2 538 428
- JP-A- H07 207 928
- JP-A- H07 207 928
- JP-A- H07 279 436
- JP-A- H1 130 038
- JP-A- H1 130 038
- US-A- 5 201 152
- US-A- 5 201 152

## Description

The present invention relates to the field of providing protection from environmental elements for a construction site and to protecting the existing surrounding environment from the construction.

Whenever a structure is to be built it is necessary to consider protection of the construction from the environment. External factors, such as rain, wind, temperature and light levels can all reduce the productivity of the works. These factors can significantly affect major works and construction projects. It is also necessary to investigate the impact the construction will have on the surrounding area. This is particularly the case when the construction is a building such as a nuclear power plant, where precision, consistency, and accountability are critical. In order to mitigate the impact of construction works on the surrounding area, conventional construction must necessarily be carried out in an inefficient manner. Daylight, weather, and noise pollution will all limit the average number of hours that construction can be carried out each day. This will particularly be the case where the construction site is located in an area designated as a dark sky reserve, where light pollution is a particular issue.

FR2538428A1 discloses a method of constructing buildings sheltered from bad weather using a cover suitable for use as a handling gantry. The cover has temporary supports which can be equipped with hoisting or raising devices. In some embodiments, the roof is made on the ground or near the ground, then hoisted by successive increments, alone or independently of the final load-bearing framework and/or of the sub-floors. The roof may be the final roof for the building, or alternatively may be a temporary roof.

JPH07207928A discloses an apparatus for constructing a structure to reduce the impact of weather on the structure and also reduce the amount of work floor space occupied by the apparatus. Lifting frames are disposed on the side of the construction. The lifting frames have a working crane apparatus. There is also provided a working frame vertically moveable by an elevating device. The apparatus can also travel along the guide rails located on the sides of the construction. The apparatus is provided with a roof portion on the upper surface of the working frame.

JPH1130038A discloses building dismantling and constructing method for dismantling a building and then constructing another building at the same place, and a living body used thereof. A temporary support pillar is erected from the ground, and a main body of a living body is installed between the temporary support pillars so as to cover the top floor of the building to be dismantled. After the dismantling is completed, the building to be constructed is gradually constructed on the ground below the body for curing, and the body for curing is gradually raised above the construction progress of the building to be constructed.

AU 2015295620B2 discloses a mobile hall construction, in particular for carrying out maintenance and/or repair work on a turbine rotor. The construction comprises at least one base frame, a plurality of support pillars which are held on the at least one base frame, and a roof structure which can be mounted on the support pillars. The support pillars are provided with at least one drive and are articulatedly mounted on the at least one base frame in such a way that, with the use of the at least one drive, they can be pivoted between a transport position and a straightened-up position relative to the at least one base frame.

JPH07279436A discloses construction equipment comprising a plurality of lift posts erected outside a building and a working frame structure having a roof installed all over a space between the upper ends of the lift posts and a support push-up device installed to the lower end of each lift support respectively

Even before construction begins, significant time and cost must be spent on obtaining permission, in the form of a development consent order (DCO), to begin construction. Depending on the location of the construction site, as well as the type of building being constructed, the cost of obtaining the DCO may be a significant proportion of the total budget. One of the biggest problems when applying for a DCO is to demonstrate the impact of the construction on a potential site. Detailed studies on the sensitivity that the existing environment may have to the construction works need to be carried out. This leads to high costs to ensure that the impact is fully understood.

It would be advantageous to find a way of reducing this cost. It would also be advantageous to provide a way of reducing or eliminating external factors which reduce the productivity of the construction. This and other objects are achieved by a modular assembly according to claim 1, a method of assembling a modular assembly according to claim 13 and a use of a modular assembly according to claim 15.

The present invention provides a modular assembly which can seal the site from the surrounding environment. The modular assembly is manufactured from a plurality of components that contain all the elements needed to construct the structure in a closed and sealed environment.

According to a first aspect of the present invention there is provided a modular assembly for fully enclosing a site during construction of a structure, the modular assembly comprising: a plurality of portal frames, each portal frame comprising two columns and a roof beam, each column and roof beam comprising a plurality of pre-assembled units; a jack-up frame for each column; at least two first rails, each of the first rails being mounted to at least one of the roof beams; at least one second rail slidably mounted to the at least two first rails; and a plurality of panels of a flexible material configured to provide a full enclosure of the site and mounted above the roof beam. The or each second rail is configured to slidably receive at least one lifting device. The pre-assembled units are configured to be connected on site, and lifted using said jack-up frames, to form the portal frames, and wherein each first rail, and the or each second rail are configured to be mounted on the portal frames on site. The modular assembly , according to the invention, further comprises at least one edge rail system mounted adjacent ar edge of the assembly, the or each edge rail system comprising: at least two third rails each of the third rails being mounted to at least one of the roof beams; at least one fourth rail slidably mounted to the at least two third rails to form an edge rail system and configured to slidably receive at least one lifting device, wherein said at least one fourth rail is aligned with said at least one second rail to enable transfer of said at least one lifting device between the at least one second rail and the at least one fourth rail.

The modular assembly preferably further comprises at least one lifting device slidably mounted to the at least one second rail, wherein the or each lifting device is configured to be mounted on the portal frames on site.

By providing a modular assembly for enclosing a site during construction of a structure the site may reduce its impact on the surrounding area. It can reduce or eliminate noise, light, dust, vibration, and over- air pressure leaving the site. It may provide a humidity and /or temperature controlled environment. The invention allows the construction to be delivered with no impact from external conditions. Due to the enclosure the construction of the structure is not impacted by the weather. Work is therefore not interrupted due to adverse weather conditions. The construction can take place in perfect conditions twenty four hours of the day without interruption or downtime. Certainty and productivity may therefore be improved. The quality of the works can be improved due to the ability to control the environment. The invention allows weather sensitive equipment to be delivered without interruption.

An advantage of the modular assembly is that construction of the structure can take place continuously. No time is lost due to adverse weather conditions. As the modular assembly prevents light pollution leaving the site the construction can also take place at night. It is important that light does not escape during construction as some sites may be in areas designated as a dark sky reserve status.

The modular assembly of the invention provides two way protection for the construction site and the environment.

The distance between portal centres may be between about 5 m and about 30 m, preferably between about 10 m and about 25 m, more preferably between about 15 m and about 20 m. The modular assembly preferably comprises a plurality of members configured to be connected between adjacent portals. The members are configured to maintain the separation between the portals.

As will be appreciated, the term "centres" is a well-known term of art which refers to the distance between the centre line of a first beam, truss, or elongate component, and a second such beam, truss, or elongate component.

The modular assembly is sized according to the requirements of the construction site. The assembly may be sized such that the minimum horizontal distance from the assembly to the structure to be constructed is between about 3 m and about 15 m, preferably between about 4 m and about 10 m. The modular assembly may be sized such that the minimum vertical distance from the assembly to the structure to be constructed is between about 3 m and about 10 m, preferably between about 4 m and about 6 m.

The modular assembly may be sized, and positioned, such that the minimum distance from the assembly to the structure to be constructed on a first side of the structure to be constructed is at least 8 m, preferably at least 10 m. In this way an access route may be provided for the provision of materials into the assembly.

Each pre-assembled unit for forming said roof beams may have a length between about 5 m and about 20 m, preferably between about 12 m and about 18 m. In a particularly preferred embodiment, each pre-assembled unit for forming said roof beams has a length of about 16 m or less. Providing the pre-assembled units with a length of 16 m or less may ensure that they can be easily delivered by conventional lorry.

Each pre-assembled unit for forming said roof beams may have a cross-sectional width of between about 1 m and about 10 m, preferably between about 2 m and about 5 m. In a preferred embodiment, the cross-sectional width of each pre-assembled unit for forming a roof beam is about 2 m. Each pre-assembled unit for forming said roof beams may have a cross-sectional height of between about 1 m and about 10 m, preferably between about 2 m and about 5 m. In a preferred embodiment, the cross-sectional width of each pre-assembled unit for forming a roof beam is about 2 m. In a preferred embodiment, the cross-sectional height of each pre-assembled unit for forming a roof beam is about 4 m. The cross-sectional shape of each said pre-assembled unit for forming said roof beams may be square, trapezoidal, triangular or any other suitable shape. In a preferred embodiment, the cross-sectional shape of each said pre-assembled unit for forming said roof beams is triangular.

Each pre-assembled unit for forming said columns may have a length between about 5 m and about 20 m, preferably between about 12 m and about 18 m. In a particularly preferred embodiment, each pre-assembled unit for forming said columns has a length of about 16 m or less. Providing the pre-assembled units with a length of 16 m or less may ensure that they can be delivered by conventional lorry.

Each pre-assembled unit for forming said columns may have a cross-sectional width of between about 1 m and about 10 m, preferably between about 2 m and about 5 m. The cross-sectional shape of each said pre-assembled unit for forming said columns may be square, trapezoidal, triangular or any other suitable shape. In a preferred embodiment, the cross-sectional shape of each said pre-assembled unit for forming said roof beams is triangular.

However, as will be appreciated, the roof beams and columns may be sized in accordance with the required overall dimensions of the modular assembly, and in accordance with the required total lifting capability to be provided within the modular assembly.

Preferably, the modular assembly comprises pre-assembled units for forming the connection between the roof beam and the column.

In a preferred embodiment, each said first rail is mounted to a plurality of roof beams. Preferably, each said first rail is mounted substantially perpendicularly to the longitudinal axis of said roof beams. The at least two first rails may be mounted such that the distance between the respective centres of said first rails is between about 10 m and about 20 m. Preferably, the distance between centres is between about 12 m and about 18 m, more preferably between about 14 m and about 16 m.

In a preferred embodiment, the modular assembly comprises at least one set of second rails, each set comprising a pair of second rails slidably mounted to the at least two first rails. Each pair of second rails are spaced apart by a plurality of separation members and configured to receive at least one lifting device configured for use on a double rail system. The pair of second rails in each set may be spaced apart by between about 1 m and about 5 m, preferably between about 2 m and about 4 m. Where a plurality of sets of second rails are provided, differently sized sets, that is the distance between the second rails, may be provided, or each set may have the same size, or a combination of same sized sets and differently sized sets.

The or each second rail is preferably slidably mounted perpendicularly to said first rails.

The modular assembly may include means for determining the relative position of the or each lifting device as compared to the modular assembly. Advantageously, providing such determining means enables increased accuracy, and efficiency, of the construction of the structure by ensuring that the components are positioned accurately and more quickly than by using conventional means. Alternatively, the means for determining the relative position of the or each lifting device is as compared to a datum point on, or near, the structure being constructed. Preferably, the means for determining the relative position of the or each lifting device comprises a plurality of sensors configured to respectively determine the position of the or each second rail supporting the lifting device relative to the first rails supporting the or each second rail, and configured to determine the position of the or each lifting device relative to the or each second rail supporting the or each lifting device. The means for determining the relative position of the or each lifting device, may further comprise means for determining the relative position of the lifting hook of the lifting device relative to the lifting device. In this way, the position of the lifting hook relative to either the modular assembly, or the structure being constructed, can be determined in three dimensions.

Alternatively, the means for determining the relative position of the lifting hooks may comprise a wireless transceiver mounted to each lifting hook, and a plurality of transmitters disposed in known locations throughout the modular assembly, each transmitter configured to transmit a signal with a unique ID. In a similar manner to the Global Positioning System (GPS), the time of arrival of each unique signal at a particular hook transceiver can be used to determine the position. Any other suitable indoor positioning system (IPS) may be used. Such a system may also be used to precisely locate, and position, components in the structure being built, by attaching one or more such wireless transceivers to the component to be located and positioned.

The assembly may also further comprise foundation rails which are configured to allow movement of the assembly. A bogie may be configured to slidably mount on the foundation rail to carry a portal frame. Each bogie preferably comprises means for locking the position of the bogie relative to the rail. The means for locking the position may comprise a brake, locking pins, or the like. The assembly may comprise a first set of foundation rails disposed along a first edge of the assembly, and a second set of foundation rails disposed along a second, opposed, edge of the assembly. Each set of foundation rails preferably comprises two foundation rails. As will be appreciated, the size and number of foundation rails are determined according to the size and weight of the modular assembly.

Alternatively to foundation rails, the assembly may comprise elongate channels, preferably of steel, for receiving the bogies of the portals.

If the modular assembly has been constructed with foundation rails configured to allow movement this has the advantage that the assembly may be moved once assembled. This allows large equipment to be entered if necessary after construction has begun, or for the assembly to be moved away from the completed structure for dis-assembly.

The assembly may comprise two parts, each part comprising a plurality of portals, each part being slidable independently on said foundation rails such that the parts can be divided once assembled.

If the modular assembly having two parts has been constructed with foundation rails configured to allow movement this has the advantage that the assembly may be parted to divide the assembly once assembled. This allows large equipment to be entered if necessary after construction has begun.

The first rails may have a length which is substantially equal to the length of the modular assembly. The first rails may have a length between about 50% and about 100% of the length of the modular assembly.

Where the modular assembly is provided in two parts, the first rails may have a length which is substantially equal to the length of one part of the modular assembly. In addition, the modular assembly may comprise two sets of first rails, and corresponding second rails, a first set provided in the first part of the modular assembly, and a second set provided in the second part of the modular assembly. The first set and the second set may be of different sizes depending on requirements. The first set of first rails may be alignable with the second set of first rails, such that the second rails are transferable from the first set of first rails to the second set of first rails, and vice versa.

The at least two third rails may be mounted such that the distance between the respective centres of said third rails is between about 3 m and about 15 m. Preferably, the distance between centres is between about 5 m and about 10 m, more preferably between about 6 m and about 8 m.

Each edge rail system may comprise at least one set of fourth rails, each set comprising a pair of fourth rails slidably mounted to the at least two third rails. Each pair of fourth rails being spaced apart by a plurality of separation members and configured to receive at least one lifting device configured for use on a double rail system.

Preferably, the or each fourth rail is slidably mounted perpendicularly to said third rails. In a preferred embodiment, each edge rail system comprises two third rails.

The modular assembly may comprise at least two such edge rail systems, each edge rail system disposed adjacent a respective edge of the assembly.

Advantageously, providing at least one edge rail system enables materials to be more easily and efficiently transferred from delivery lorries, and the like, to the required location within the modular assembly.

The first rails, second rails, third rails, and fourth rails, are preferably I-beams, and are preferably formed of steel.

The at least one second rail, and/or the at least one fourth rail, of the modular assembly may carry a plurality of lifting devices. The lifting devices may be cranes.

The pre-assembled units of the portal frames may be formed from truss structures.

The modular assembly may also include a plurality of end trusses, to form end walls, and close the ends thereof. Each end truss may be formed of a plurality of pre-assembled end truss units. The plurality of end trusses are preferably arranged substantially vertically, and are connected to the roof beams of the end portals. The assembly may further comprise a plurality of members configured to connect adjacent end trusses. The end trusses are preferably configured to provide an entrance for building materials, and the like. The entrance may comprise a door formed of the fabric panels. Alternatively the entrance may be formed by a door formed of any suitable solid material. The solid doors may be formed from elements assembled on site.

The pre-assembled units which make up the modular assembly may be transported to the construction site by lorry.

It is not essential that the modular assembly is the same height throughout. Portal frames of differing heights may be used.

The panels of fabric may be formed from a thermal fabric. Noise reducing material may also be used instead of, or as well as, the thermal fabric.

The fabric may be formed of at least two layers, the layers being spaced apart. An insulation layer may be provided between the layers of thermal fabric. The layers of thermal fabric and the insulation layer may be quilted to form a continuous sandwiched material.

The fabric of the noise reducing panels may be formed of a double skin with a suitable filler in-between.

Advantageously, providing panels of thermal fabric to form an enclosure enables the environment within the assembly to be controlled. In particular, the use of thermal fabric with low air permeability may increase the proportion of the year that concrete may be poured, assuming a minimum temperature for pouring concrete of 2 degrees C and rising, may be increased by at least 5%, more preferably by at least 10%. This increase does not require direct heating of the assembly, merely people, lighting and equipment provide sufficient indirect heating to enable the increase.

The outer surface of the panels may be painted. Advantageously, painting the panels may enable the assembly to help blend in with the environment.

According to a second aspect of the present invention, there is provided a method of assembling the modular assembly as described herein, the method comprising the steps of: positioning a plurality of jack up frames; providing a plurality of pre-assembled units and using said jack up frames to synchronously build-up a plurality of portal frames from the pre-assembled units, each portal frame comprising two columns and a roof beam; mounting at least two first rails to at least one roof beam; slidably mounting at least one second rail to the at least two first rails; slidably mounting at least one lifting device to at least one second rail; and mounting a plurality of panels of a flexible material on top of the portal frame. The mounting steps take place after the roof beams are connected to the respective columns, and before the columns are built-up to the required height. The method further comprising the steps of: mounting at least one edge rail system adjacent an edge of the assembly, comprising: mounting at least two third rails to at least one of the roof beams; slidably mounting at least one fourth rail to the at least two third rails to form an edge rail system; and slidably mounting at least one lifting device to the at least one fourth rail, wherein, the at least one fourth rail is configured to be alignable with at least one second rail to enable transfer of at least one lifting device between the at least one second rail and the at least one fourth rail.

Preferably, the step of synchronously building-up the plurality of portal frames comprises; positioning a first pre-assembled column unit within said jack-up frame; connecting a plurality of pre-assembled roof beam units to form a plurality of roof beams; connecting each formed roof beam to a respective pair of the positioned pre-assembled column units; and, after the mounting steps, synchronously jacking-up each pre-assembled column unit and positioning and connecting further pre-assembled column units within said jack-up frame. As will be appreciated, the step of synchronously jacking-up each pre-assembled column unit and positioning and connecting further pre-assembled column units within said jack-up frame is repeated until the portal frames are at the desired height. Alternatively, two or more pre-assembled column units may be positioned, and jacked-up, before the roof beam is connected.

Advantageously, mounting roof level components, such as the first rails, second rails, lifting devices, and pre-furled panels, reduces the requirement of works to be carried out at height. This increases the safety and efficiency of assembling the modular assembly.

Preferably, the method comprises providing foundation rails configured to allow movement of the assembly wherein the modular assembly is assembled adjacent the construction site and then slid along the rails to the site, wherein the step of positioning the plurality of jack-up frames comprises rolling said jack-up frames along said foundation rails.

According to a third aspect of the present invention, there is provided a kit of parts for a modular assembly for at least partially enclosing a site during construction of a structure, the kit comprising: a plurality of pre-assembled units for forming a plurality of portal frames, each portal frame comprising two columns and a roof beam; a pair of jack up frames for each portal frame; a plurality of first rails; at least one second rail; and a plurality of pre-furled panels of a flexible material.

According to a fourth aspect of the present invention, there is provided use of a modular assembly as described herein, the modular assembly providing a site factory for the construction of a structure.

Once all equipment is installed inside the modular assembly it can be sealed against the weather and construction of the structure can begin with minimum or no contact with the exterior. Due to the sealing of the site much less impact assessment on the surrounding environment need be done which leads to large cost savings.

As used herein, the term longitudinal refers to the direction along the greater dimension of a component or feature. Similarly, the term transverse refers to the direction, perpendicular to the longitudinal direction, along the lesser dimension of a component or feature.

The roof beams, as described herein, are preferably arranged in the transverse direction of the modular assembly. The first rails, and where provided the third rails, as described herein, are preferably arranged along the longitudinal direction of the modular assembly. The second rails, and where provided the fourth rails, as described herein, are preferably arranged along the transverse direction of the modular assembly. However, as will be appreciated, the first rails, and where provided the third rails, may be arranged along the transverse direction of the modular assembly. In this embodiment, the second rails, and where provided the fourth rails, are arranged along the longitudinal direction of the modular assembly.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

The invention will be further described, by way of example only, with reference to the accompanying drawings in which:
Figure 1 is a schematic exploded view illustrating the elements of the basic framework of the modular assembly;
Figure 2 is a schematic illustration of the assembly of a portal of the modular assembly along time line T;
Figure 3 illustrates a jack-up frame and the erection frame and a unit of a column formed of pre-assembled units;
Figure 4 illustrates the pre-assembled units which form the roof beam;
Figure 5 is a schematic view illustrating how the transverse and longitudinal rails are positioned to allow lifting device movement along two axes of the assembly;
Figure 6 is a detailed view of a simplified rail and lifting device arrangement;
Figure 7 is a more detailed view of the rails shown in Figure 5;

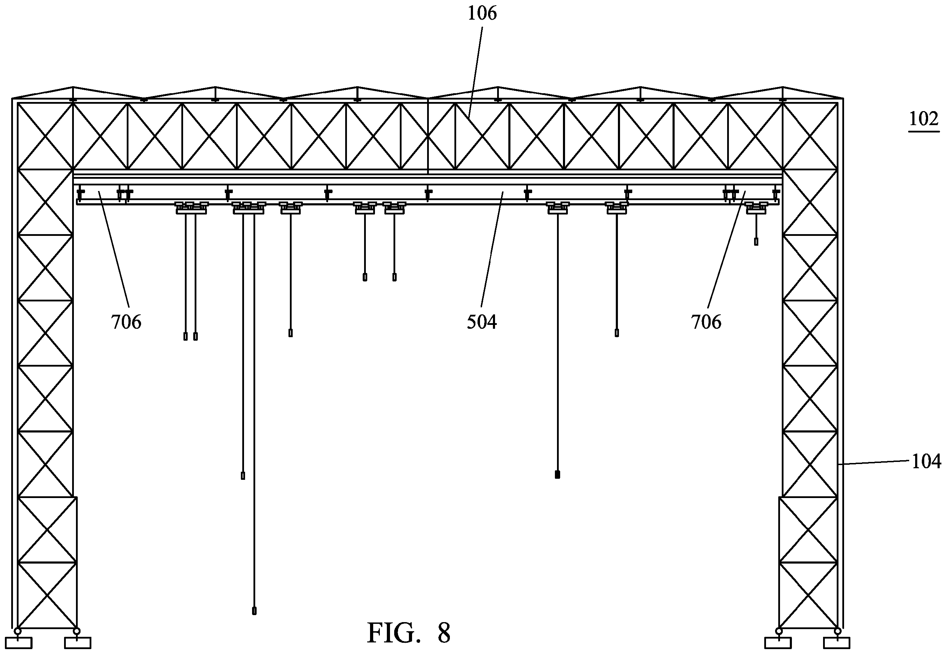

Figure 8 is a schematic view illustrating a portal frame including the rail and lifting devices;
Figure 9 is a schematic view illustrating the rolls of unfurled fabric located above the roof beam;
Figure 10 shows the assembled modular assembly enclosing the construction site;

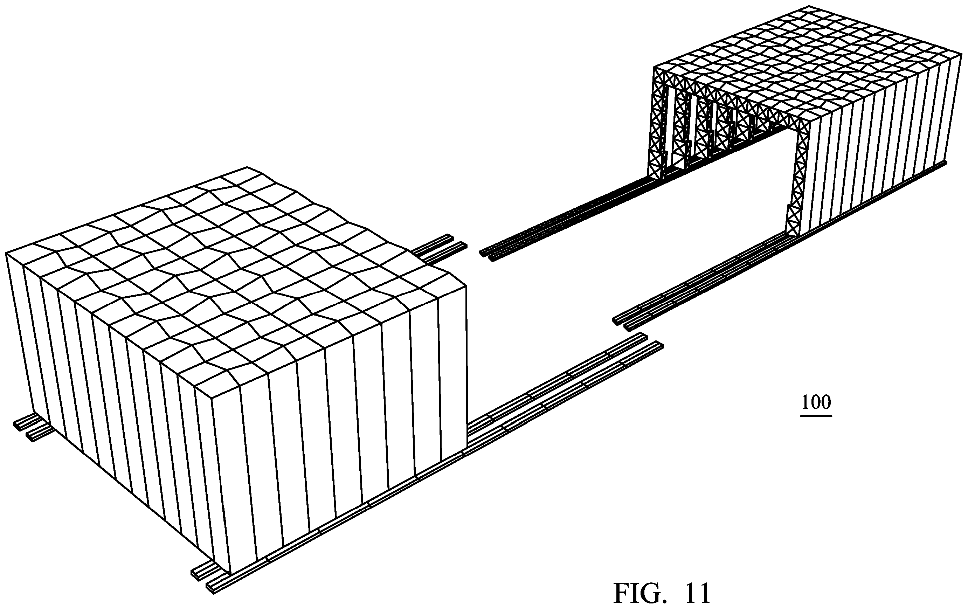

Figure 11 shows the assembled modular assembly illustrating how the two parts may be moved away from the other; and
Figure 12 is graph comparing the amount of construction activity at the construction site when the site is covered by the modular assembly and when it is not covered.

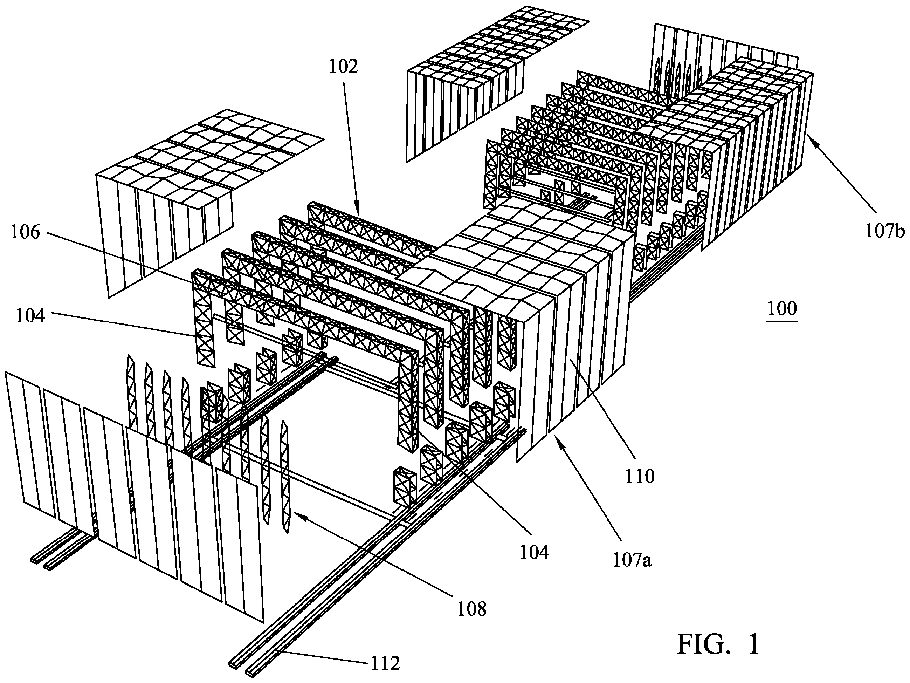

Figure 1 illustrates the elements of the basic framework of the modular assembly 100. As described herein, the modular assembly forms a site factory for constructing a structure, a building such as a nuclear power plant, in an environment which more closely resembles a factory facility than a conventional construction site. The elements of the basic framework of the modular assembly are made of steel material. Typically the elements are trussed elements formed by a plurality of structural frames into which are inserted diagonal members. The diagonal members help to stabilise the frame.

The modular assembly comprises a plurality of portal frames 102. The use of portal frames allows the creation of a wide-span enclosure which can provide a clear space uninterrupted by intermediary columns. Each portal frame comprises two columns 104 and a roof beam 106. The joints between the roof beam and the columns are rigid, allowing the bending moment in the beam to be transferred to the columns. The roof beam can therefore span large distances and thus provides the uninterrupted space. The modular assembly comprises a series of substantially parallel portal frames that run down the length thereof. Typically the portal frames are 5 to 25 metres apart. The modular assembly shown in Figure 1 has two sections, a first section 107a where the portals are provided 20 m apart, and a second section 107b where the portals are provided 15 m apart. The portal frames form the skeleton of the modular assembly 100. Each end of the completed assembly is provided with a number of end trusses 108. Each end truss 108 extends the full height of the modular assembly. Each end truss 108 has a width between 0.5m and 2m. A fabric skin or covering 110 is provided which will completely enclose the modular assembly once assembled. The covering comprises a plurality of individual panels. The panels are provided in the form of rolls of fabric which are located on the top of the roof beam before the fabric is unfurled. The size of the roll is determined by the length of fabric required which will be dependent upon the height and width of the modular assembly.

In a preferred embodiment the modular assembly is built upon skid rails 112, each side of the modular assembly being supported by two skid rails. This allows the modular assembly to be moved after it is assembled if it is not built directly over the site. This may be the case if the structure is e.g. a nuclear reactor. In this case the skid rails are laid before any pre-assembled units are delivered to the site or any assembly takes place.

All the elements of the modular assembly are supplied in pre-assembled units and brought to the construction site in separate pieces. These pre-assembled units are of a size that they can be delivered to the site by lorry. Typically this will be in the region of 16m by 4m by 4m max. Once delivered to the site the pre-assembled units are bolted or otherwise connected together to form the columns and roof beams of the modular assembly.

The size of the assembled portal frames are dependent upon the size of the structure which is to be constructed within the modular assembly. Typically the height may be in the region of 60 m with the width being in the region of 120 m, and the length being in the region of 200 m. These dimensions are relevant to the nuclear industry. However the invention is not limited to such dimensions.

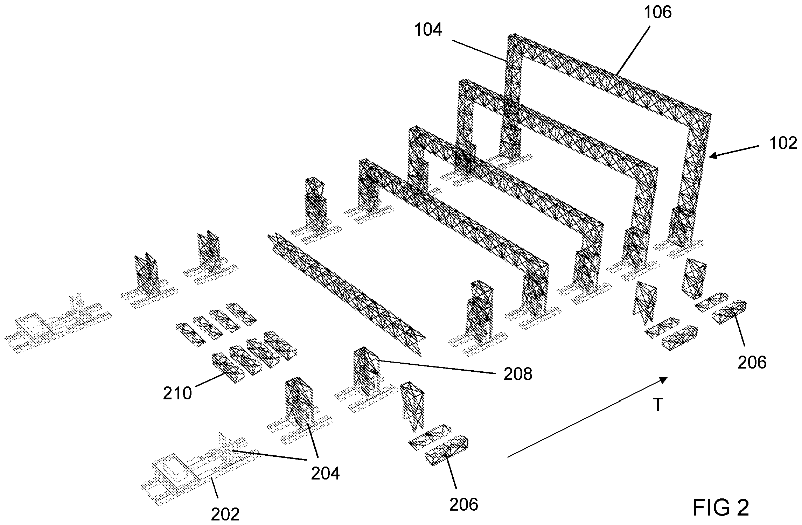

Figure 2 illustrates a time line of how one portal of the modular assembly is constructed. As will be appreciated, although Figure 2 only illustrates a single portal being formed over time, this procedure is carried out for all of the portals substantially simultaneously. As explained above the assembly is delivered to the site in individual pre-assembled units and the assembly built up on site.

The foundations of the modular assembly consist of two strip foundations that are designed for the specific ground conditions of the site. The strip foundation comprises a pair of rails 202 on which a bogie mounted jack-up tower 204 is located. The jack-up towers 204 and bogies are constructed from pre-assembled units. The foundation rails are configured to allow movement of the modular assembly in the direction of the rails. The jack-up towers are pre-assembled at ground level, or are delivered pre-assembled.

Each portal frame 102 comprises two columns 104 and a roof beam 106. The columns 104 of each portal frame are built-up simultaneously, and in a synchronised manner such that the roof of the assembly remains substantially horizontal. Each column comprises a plurality of pre-assembled units 206. Each pre-assembled unit 206 comprises a truss structure as described above. The lowermost, as shown, pre-assembled units 206 are positioned at the correct location by means of the bogie and form an erection frame 208. However, as will be appreciated, once the portal is fully formed the pre-assembled unit 206 forms the joint between the column 104 and the roof beam 106 and so becomes the uppermost pre-assembled unit of the column. The jack-up tower 204 is then used to build-up the columns 104 to the required height by adding further pre-assembled column units. The erection frames 208 are part of the portal frame and remain in position throughout.

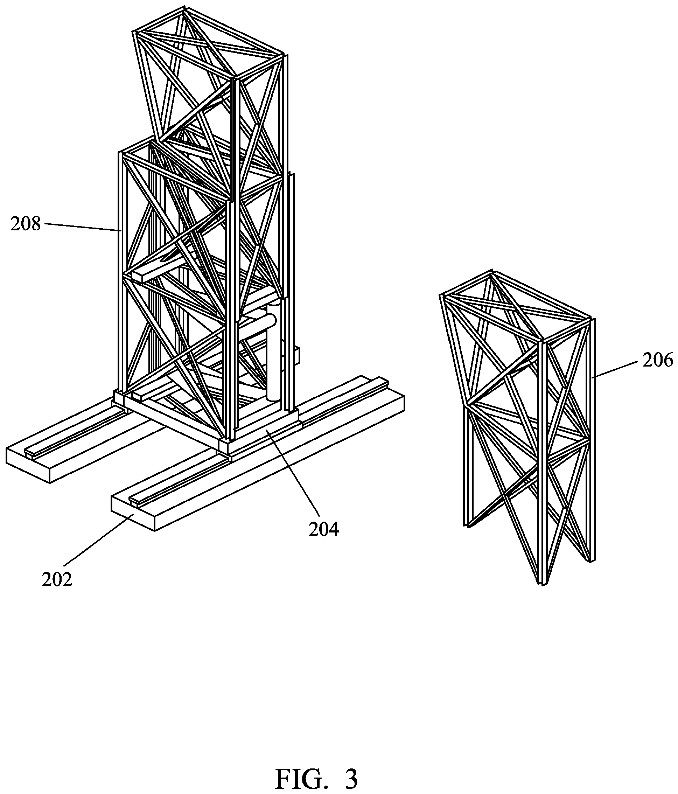

Figure 3 is a schematic illustration showing the jack up tower 204 and the erection frame 208 in more detail.

As each pre-assembled unit 206 is added to the column 104 it is locked off and tie bars are connected between each portal frame 102. The tie bars are provided for stability only and do not form part of the load bearing structure. Additional diagonal bracing members are provided between the portals, in both the plane of the walls and of the roof, to provide the modular assembly with sufficient rigidity, for example to withstand side loads, such as wind loads.

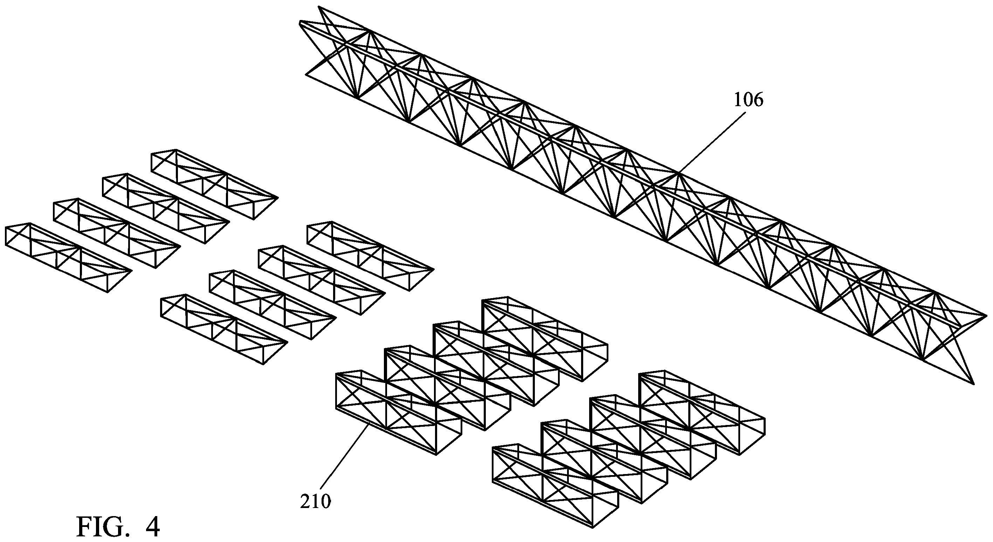

Once the columns have reached a certain height the roof beam 106 may be assembled. For example, the roof beam may be assembled, and connected to the corresponding columns after the first pre-assembled units of each column are in place, and connected to the erection frame. The roof beam is assembled at low level from a plurality of pre-assembled units 210. Figure 4 illustrates the roof beam 106 and the pre-assembled units 210 which form the roof beam. Each pre-assembled unit 210 comprises a truss structure as described above. These pre-assembled truss structure units are bolted together to form the roof beam prior to the beam being lifted into position at the top of the columns. The roof beam is lifted onto the columns by crane. All roof mounted equipment is installed by mobile crane from ground level. All equipment, including lighting is installed before the columns are jacked up.

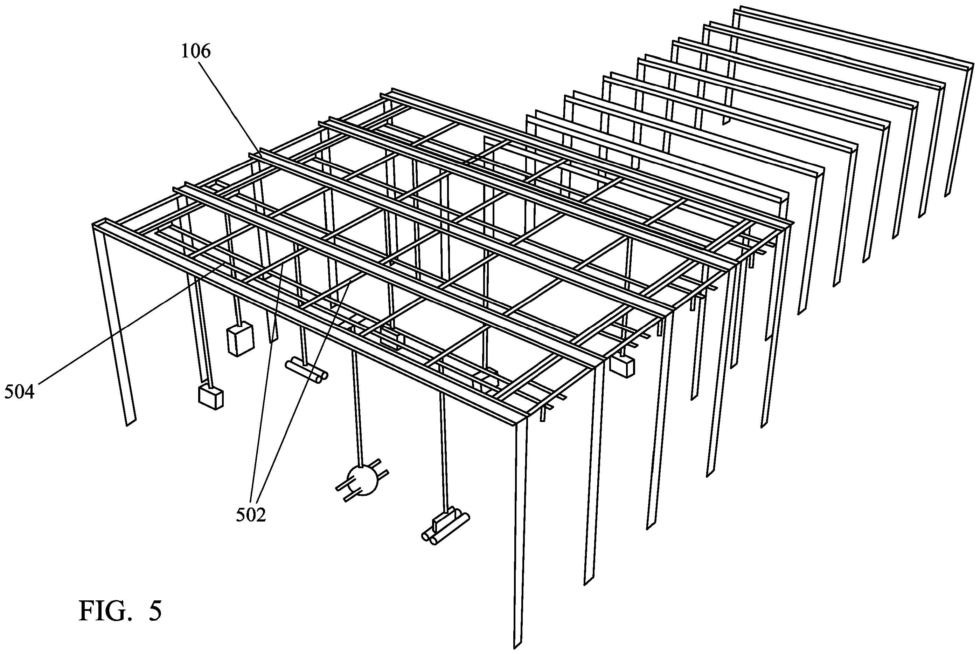

At least two longitudinal (first) rails 502 are bolted or otherwise fixed below the roof beam 106 before the columns are built-up to full height. In the example shown in the figures, in particular in Figure 5, the first section of the modular assembly is shown with seven such main longitudinal rails. The longitudinal rails span between the plurality of portal frames and run the length of the first section of the modular assembly. Each longitudinal rail is supported by the roof beam. In this particular example, the distance between centres of the longitudinal rails is about 15 m, but may be more or less depending on lifting requirements.

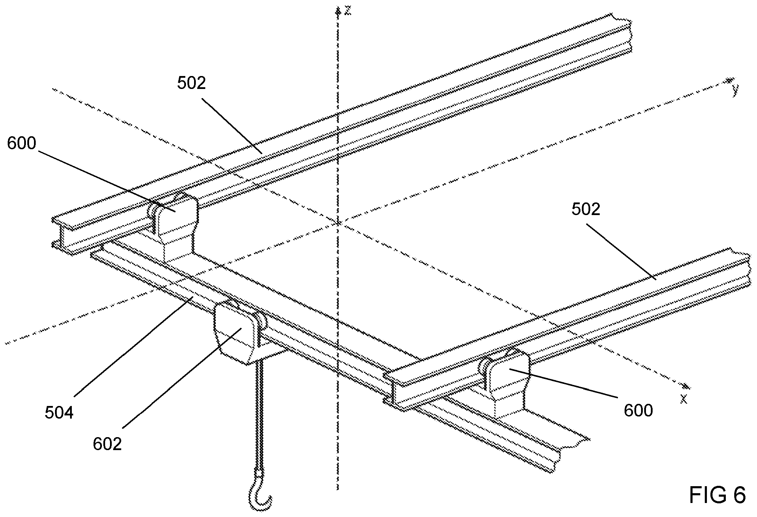

At least one transverse (second) rail 504, is slidably mounted to the at least two main longitudinal rails 502 by bogies 600. The transverse rails are slidably mounted such that they are substantially perpendicular to the longitudinal rails. In preferred examples, as shown in the figures, the transverse rails are provided in pairs, spaced apart by spacing members. The transverse rails in a set are spaced apart by about 3 m. In the embodiment shown in the figures, in particular in Figure 5, the first section of the modular assembly is shown with four such pairs of transverse rails. Each set of transverse rails is configured to support one or more lifting devices. This is described in more detail below. However, as shown in Figure 6, a single transverse rail 504 may be provided, slidably connected to the longitudinal rails 502 by two bogies 600, and having a lifting device 602 slidably connected thereto. Such a simplified version of the rail and lifting device system may be used where the lifting load is relatively low.

Both the longitudinal rails and the transverse rails, and indeed the lifting devices, and any other components, such as lighting, that are connected to the roof beams, are added before the columns are jacked to full height. The assembly of the longitudinal rails and transverse rails relative to the roof are best illustrated in Figure 5. Figure 5 is a schematic view of the modular assembly illustrating how the at least one transverse rail and the at least two longitudinal rails are positioned to allow lifting device movement along two axes of the assembly.

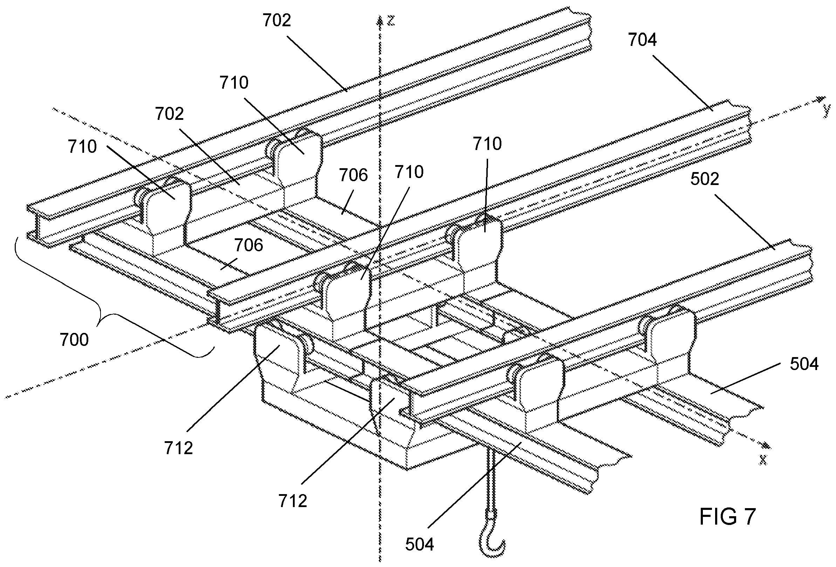

As can be seen in Figures 5, two edge rail systems are provided along respective the longitudinal edges of the modular assembly. Figure 7 shows the edge rail system 700 in more detail. Each edge rail system 700 comprises two longitudinal edge (third) rails 702 and 704, connected to the roof beams, and arranged in a similar manner to the main longitudinal rails described above. Each edge rail system 700 also comprises at least one transverse edge (fourth) rail 706 slidably mounted to the longitudinal edge rails 702 and 704. In preferred examples, as shown in the figures, the transverse edge rails 702 and 704 are provided in pairs, spaced apart by spacing members 708. The transverse edge rails in a set are spaced apart by about 3 m. In the embodiment shown in the figures, in particular in Figure 5, the first section of the modular assembly is shown with four such pairs of transverse edge rails disposed on each edge rail system. Each set of transverse rails is configured to support one or more lifting devices. The edge rail system includes bogies710 which allow the system to travel along the longitudinal edge rails 702 and 704. The lifting devices are carried below the rails 502, 702, 704 of the system by means of bogies 712 on the underside of the rails 706, 504.

As stated above the main longitudinal rails 502 are positioned below the roof beam and are supported by the roof beam. The transverse rails 504 are positioned below the main longitudinal rails and are slidably mounted on the main longitudinal rails. The transverse rails are mounted on the longitudinal rails by means of overhead bogies which allows the transverse rails to run along the longitudinal rails and thus along the length of the modular assembly. The lifting devices are mounted on the transverse rails by means of bogies on the underside thereof. This allows the lifting devices to run along the underside of the transverse rails and thus across the width of the modular assembly. The arrangement of the longitudinal rails and the transverse rails thus allows the lifting devices to move up and down the modular assembly as required. This allows the lifting devices to be precisely manoeuvred into a required location. Multiple lifting devices can be moved to construction hot spots as construction intensity moves around the site. The lifting devices are unobstructed within the enclosure.

In order to enable precision building, means for determining the relative position of the or each lifting device, and lifting hook, as compared to the modular assembly are provided. The means for determining the relative position of the or each lifting device and lifting hook comprises a plurality of sensors configured to respectively determine the position of the or each transverse rail supporting the lifting device relative to the longitudinal rails supporting the or each transverse rail, and configured to determine the position of the or each lifting device relative to the or each transverse rail supporting the or each lifting device. The means for determining the relative position of the or each lifting device, further comprises means for determining the relative position of the lifting hook of the lifting device relative to the lifting device.

The lifting devices may be cranes. The cranes can move along the width and length of the modular assembly as described above.

As described above, Figure7 is a more detailed view of Figure 5. The cranes are lifted onto the transverse rail 504 once the initial framework of the modular assembly has been assembled and the longitudinal rails and transverse rails have been connected to the roof beams. Only then are the columns 104 jacked-up to full height. As described above, the edge rail system 700 is provided at the side of the site. The cranes are delivered to the site and travel along the edge rail system over the access road at the side of the site. The edge rail system 700 travels along the assembly until it reaches the transverse rails to which the lifting device is to be transferred. The rails of the edge rail system will then be aligned with the transverse rails. When the rails 504 and 706 are aligned with each other the lifting device may be transferred onto the transverse rail 504. The number of lifting devices is such that the density of hook provision can reflect the amount of construction activity. In use, the lifting devices can be transferred to and from the main transverse rails from and to the edge rail system as required. For example, the edge rail system can be used to transfer delivered components to the main construction site from lorries positioned along the access road. In addition, the edge rail system may be used to transfer lifting devices from one set of main transverse rails to another set of main transverse rails to increase the hook density in any one location, or to increase the lifting capacity in any one location.

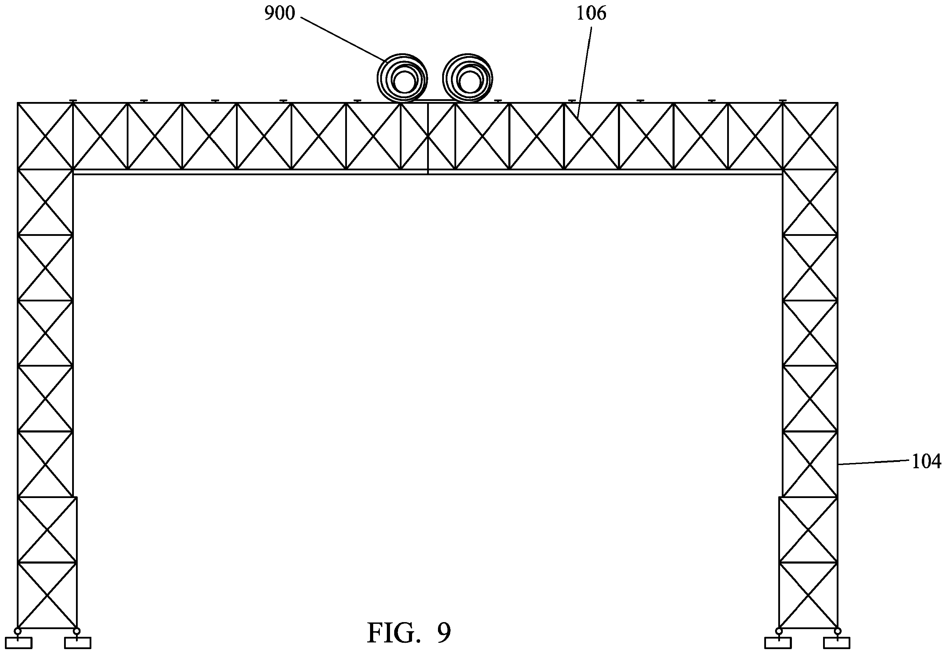

Before the roof is jacked-up to full height, rolls of fabric 900 are also installed on the upper side of the roof, as shown in Figure 9. The rolls are installed in furled condition. The rolls are fixed on the upper side of the roof beam 106 by any suitable means. Each roll provides an individual panel of fabric. The rolls are arranged in pairs in the middle of the roof. A plurality of rolls are provided along the length of the modular assembly. The width of each roll may be substantially the same as the distance from a first edge of a portal frame to the first edge of an adjacent portal frame. This is not however essential and the width may be greater, or less than this. All that is required is that the combined width of the roll of panels is sufficient to cover the length of the modular assembly. When the rolls are unfurled one roll is unfurled down one side of the framework and the other of the pair of rolls is unfurled down the opposite side of the framework. At either end of the modular assembly there is provided further rolls arranged to be unfurled down each end of the assembly to fully enclose the assembly.

Tie bars are fixed between each roof beam for stability, and support, before the rolls of fabric are positioned.

The rolls of fabric 900 located on the upper side of the roof beam 106 are unfurled down either side of the assembly once the modular assembly is assembled and locked in position and equipment, such as the lifting devices, is installed inside. The rolls of fabric can be delivered to the site by lorry.

The fabric used for the fabric rolls must be flexible enough to be supplied as rolls of fabric. Once the rolls are unfurled the fabric panel is rolled out to form the roof and the walls of the modular assembly. The fabric is rolled down the sides of the assembly and seals the modular assembly. The panels are tightened and locked off. It is possible to locate site offices directly adjacent the portal frames. In this case the fabric may unfurl to cover these. Such an embodiment would allow direct access to the interior of the modular assembly through the site offices. In this instance the length of the roll would be increased to accommodate the extra surface area to be covered.

The fabric may have the thermal qualities necessary to regulate the temperature within the modular assembly. A possible fabric could be PVC coated polyester. However, a person skilled in the art will understand that any suitable material may be used. The invention is not limited to the named material. Different fabrics may be used for different environments, depending on the specific requirements of each site. For example more heavy duty protection may be required to significantly reduce noise impact and additional screening may be provided. To reduce noise impact the fabric may comprise a composite material or be formed of a double skin with a suitable filler in between.

It is also important to control the humidity within the site factory enclosure. To that end equipment such as heaters and de-humidifiers may be introduced into the enclosure.

Once the portals of the assembly have been jacked-up to full height, the end trusses 108 are bolted or otherwise connected to either end of the assembly. The end trusses are connected to the portal frames located at each end of the assembly, and are provided with at least one doorway formed of the fabric panels (not shown). Once the end trusses are in place, the rolls of fabric arranged to cover the end walls of the assembly are unfurled, and fixed in place.

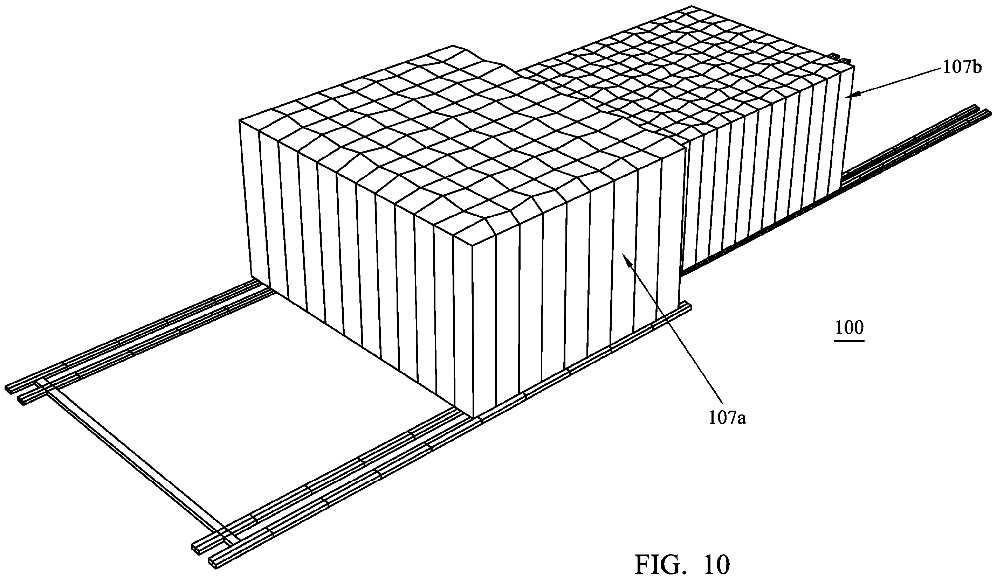

It will be noted that the figures show portals of two different heights. It is therefore not essential that the entire modular assembly has the same height. Figure 10 illustrates an assembled modular assembly comprising sections of two differing heights. Such an assembly may be used when structures of two differing heights are to be constructed within the modular assembly, for instance a nuclear reactor and a cooling turbine. The person skilled in the art will understand these are not features of the invention. The modular assembly of the invention is not limited by the type of structure to be built within it. It will be understood by those skilled in the art that the modular assembly may be the same height throughout. The present application has been designed with particular application to nuclear sites. However the person skilled in the art will understand that the structure is not limited to such construction sites.

The modular assembly, in the example shown in the figures, is constructed in two sections; a first section disposed away from a first end of the primary construction site, and a section disposed away from a second end of the construction site. Once each section of the modular assembly is complete, each section is moved into position over the construction site to form a complete enclosure (as shown in Figure 10).

In use, the modular assembly provides environmental protection for a construction site. The construction can take place within the sealed space of the assembly with significantly reduced influence of external factors. Equally the construction activity will have reduced impact on the outside environment.

The key determinant of construction productivity is material handling, and as described above, the present modular assembly is provided with a plurality of lifting devices to enable that material handling. Each lifting device provides a "20 tonne hook", such that the hooks can be located at any point within the assembly. Using a "swarm" of such "20 tonne hooks" the lifting capacity at any point in the modular assembly can be significantly increased, and the present example allows for individual lifts of up to 170 tonnes.

The construction materials would be supplied to stockpile and processing areas provided at the ends of the modular assembly. The materials are then transferred from these areas, for example using the edge rail system as described above.

As explained above the modular assembly of the example shown in the figures is built upon skid rails. As described above, this allows construction of the modular assembly to take place adjacent to the area of the actual construction site. This feature also allows the modular assembly to be split. Splitting the modular assembly provides a side opening which may allow a particularly heavy or large piece of equipment to enter the assembly. The assembly may then slide again to close the opening. The assembly may also be slid back along the rails to dis-assemble the modular assembly away from the completed structure.

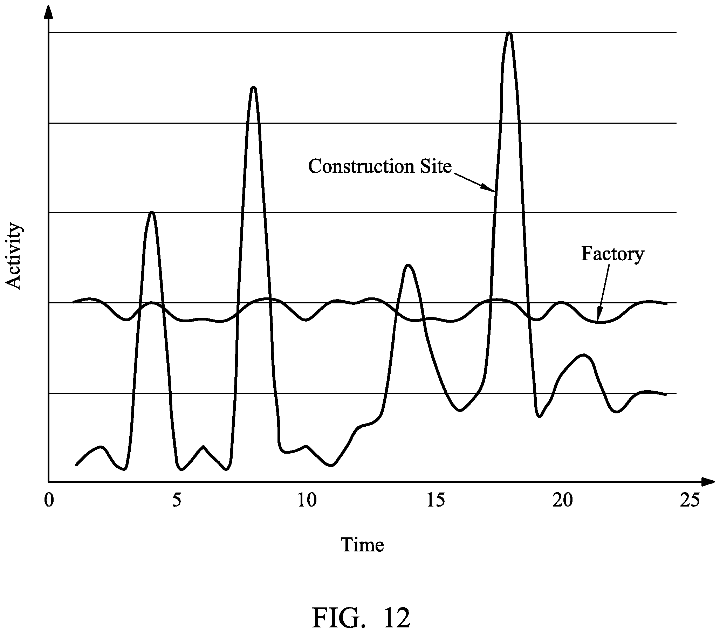

Figure 12 is graph comparing the amount of construction activity at a construction site when the site is covered by the modular assembly and that of a conventional, open-air, construction site.

As can be seen when a construction site is covered by the modular assembly the activity that can take place is fairly constant. This is due to the fact that exterior variables have a smaller impact on the activity. Compared to a conventional uncovered construction where the amount of activity is hugely variable, the present modular assembly, a site factory, provides significant advantages. The huge variation in building activity can be due to factors such as adverse weather conditions or even just the amount of light available. Having a constant amount of activity allows better forward planning as to how long a project may take, and will likely reduce build time, and reduce costs. It also allows more efficient planning of when parts of the construction site need to be delivered.

The modular assembly remains in place throughout the construction of the structure. This may be several years but will be significantly shorter than if the construction took place outside of the modular assembly. When the construction is finished the modular assembly may be dis-assembled. The dis-assembled units can then be transported away from the site by lorry. The dis-assembled units may be used at another site.

It will be understood by those skilled in the art that the scope of the invention is not limited to the embodiments described above. This written description uses examples to disclose the invention and also to enable any person skilled in the art to practice the invention.

## Claims

1. A modular assembly (100) for fully enclosing a site during construction of a structure,
the modular assembly (100) comprising:
a plurality of portal frames (102), each portal frame (102) comprising two columns (104) and a roof beam (106), each column (104) and roof beam comprising a plurality of pre-assembled units (210);
a jack-up frame (204) for each column (104);
at least two longitudinal first rails (502), each of the first rails (502) being mounted to at least one of the roof beams (106);
at least one transverse second rail (504) slidably mounted to the at least two first rails (502); and
a plurality of panels (110) of a flexible material configured to provide a full enclosure of the site and mounted above the roof beam (106);
wherein, the or each second rail (504) is configured to slidably receive at least one lifting device (602);
wherein, the pre-assembled units (210) are configured to be connected on site, and lifted using said jack-up frames (204), to form the portal frames (102), and wherein each first rail (502), and the or each second rail (504) are configured to be mounted on the portal frames (102) on site;
the modular assembly **characterized in that** it further comprises at least one edge rail system (700) mounted adjacent an edge of the assembly (100), the or each edge rail system (700) comprising:
at least two longitudinal edge third rails (702, 704) each of the third rails (702, 704) being mounted to at least one of the roof beams (106);
at least one transverse edge fourth rail (706) slidably mounted to the at least two third rails (702, 704) to form an edge rail system (700) and configured to slidably receive said at least one lifting device (602), wherein said at least one fourth rail (706) is configured to be aligned with said at least one second rail (504) to enable transfer of said at least one lifting device (602) between the at least one second rail (504) and the at least one fourth rail (706).

2. A modular assembly (100) according to Claim 1, wherein each said first rail (502) is mounted to a plurality of roof beams (106).

3. A modular assembly (100) according to Claim 1 or 2, wherein said at least two first rails (502) are mounted such that the distance between the respective centres of said first rails (502) is between about 10 m and about 20 m.

4. A modular assembly(100) according to Claim 1, 2 or 3, comprising at least one set of second rails (504), each set comprising a pair of second rails (504) slidably mounted to the at least two first rails (502), wherein each pair of second rails (504) are spaced apart by a plurality of separation members and configured to receive at least one further lifting device configured for use on a double rail system.

5. A modular assembly (100) according to any of the preceding claims, further comprising foundation rails (202) configured to allow movement of the assembly (100), optionally, wherein each portal frame (102) is carried by a bogie, each bogie being configured to be slidably mounted on one of said foundation rails (202).

6. A modular assembly (100) according to claim 5, wherein the assembly comprises two parts, each part comprising a plurality of portals (102), each part being slidable independently on said foundation rails (202) such that the parts can be divided once assembled.

7. A modular assembly (100) according to any of the preceding claims, wherein the modular assembly (100) comprises at least two edge rail systems (700), each edge rail system (700) disposed adjacent a respective edge of the assembly (100).

8. A modular assembly (100) according to any preceding claim, further comprising at least one lifting device slidably mounted to the at least one second rail (504).

9. A modular assembly (100) according to any preceding claim, wherein the pre-assembled units (210) of the portal frames (102) are formed from trusses.

10. A modular assembly (100) according to any preceding claim, further comprising a plurality of end trusses (108).

11. A modular assembly (100) according to any preceding claim, wherein the plurality of portals (102) are of at least two differing heights.

12. A modular assembly (100) according to any preceding claim, wherein the panels are formed from a thermal fabric, optionally, wherein the thermal fabric is a PVC coated polyester.

13. A method of assembling the modular assembly (100) according to any of claims 1 to 12, the method comprising the steps of:
positioning a plurality of jack up frames;
providing a plurality of pre-assembled units (210) and using said jack up frames to synchronously build up a plurality of portal frames (102) from the pre-assembled units (210), each portal frame comprising two columns (104) and a roof beam (106);
mounting at least two longitudinal first rails (502) to at least one roof beam (106);
slidably mounting at least one transverse second rail (504) to the at least two first rails (502);
slidably mounting at least one lifting device to at least one second rail (504);
mounting a plurality of furled panels of a flexible material on top of the portal frame (102); wherein the mounting steps take place after the roof beams (106) are connected to the respective columns (104), and before the columns (104) are built-up to the required height; and
the method **characterized by** further comprising the steps of:
mounting at least one edge rail system adjacent an edge of the assembly, comprising:
mounting at least two longitudinal edge third rails to at least one of the roof beams;
slidably mounting at least one transverse edge fourth rail to the at least two third rails to form an edge rail system; and
slidably mounting said at least one lifting device to the at least one fourth rail,
wherein, the at least one fourth rail is configured to be aligned with at least one second rail to enable transfer of said at least one lifting device between the at least one second rail and the at least one fourth rail.

14. A method according to claim 13, including providing foundation rails configured to allow movement of the assembly wherein the modular assembly (100) is assembled adjacent the construction site and then slid along the rails to the site, wherein the step of positioning the plurality of jack-up frames (204) comprises rolling said jack-up frames (204) along said foundation rails (202).

15. Use of a modular assembly (100) according to any of claims 1 to 14, the modular assembly (100) providing a site factory for the construction of a structure.

## Patentansprüche

1. Modulare Baugruppe (100) zum vollständigen Einkapseln einer Baustelle während des Baus eines Bauwerks, wobei die modulare Baugruppe (100) Folgendes umfasst:
mehrere Portalrahmen (102), wobei jeder Portalrahmen (102) zwei Säulen (104) und einen Dachträger (106) umfasst, wobei jede Säule (104) und jeder Dachträger mehrere vormontierte Einheiten (210) umfasst;
einen Hubrahmen (204) für jede Säule (104);
mindestens zwei erste Längsschienen (502), wobei jede der ersten Schienen (502) an mindestens einem der Dachträger (106) montiert ist;
mindestens eine zweite Querschiene (504), die verschiebbar an den mindestens zwei ersten Schienen (502) montiert ist; und
mehrere Paneele (110) aus einem flexiblen Material, die zum Erzielen einer vollständigen Einkapselung der Baustelle konfiguriert und oberhalb des Dachträgers (106) montiert sind;
wobei die oder jede zweite Schiene (504) zum verschiebbaren Aufnehmen mindestens einer Hebevorrichtung (602) konfiguriert ist;
wobei die vormontierten Einheiten (210) zum Verbinden vor Ort und zum Anheben mittels der genannten Hubrahmen (204) konfiguriert sind, um die Portalrahmen (102) zu bilden, und wobei jede erste Schiene (502) und die oder jede zweite Schiene (504) zum Montieren vor Ort an den Portalrahmen (102) konfiguriert sind;
wobei die modulare Baugruppe **dadurch gekennzeichnet ist, dass** sie ferner mindestens ein Randschienensystem (700) umfasst, das neben einem Rand der Baugruppe (100) montiert ist, wobei das oder jedes Randschienensystem (700) Folgendes umfasst:
mindestens zwei dritte Längsrandschienen (702, 704), wobei jede der dritten Schienen (702, 704) an mindestens einem der Dachträger (106) montiert ist;
mindestens eine vierte Querrandschiene (706), die verschiebbar an den mindestens zwei dritten Schienen (702, 704) montiert ist, um ein Randschienensystem (700) zu bilden, und zum verschiebbaren Aufnehmen der genannten mindestens einen Hebevorrichtung (602) konfiguriert ist, wobei die genannte mindestens eine vierte Schiene (706) zum Ausrichten mit der genannten mindestens einen zweiten Schiene (504) konfiguriert ist, um die Übertragung der genannten mindestens einen Hebevorrichtung (602) zwischen der mindestens einen zweiten Schiene (504) und der mindestens einen vierten Schiene (706) zu ermöglichen.

2. Modulare Baugruppe (100) nach Anspruch 1, wobei jede genannte erste Schiene (502) an mehreren Dachträgern (106) montiert ist.

3. Modulare Baugruppe (100) nach Anspruch 1 oder 2, wobei die genannten mindestens zwei ersten Schienen (502) so montiert sind, dass der Abstand zwischen den jeweiligen Mittelpunkten der genannten ersten Schienen (502) zwischen etwa 10 m und etwa 20 m beträgt.

4. Modulare Baugruppe (100) nach Anspruch 1, 2 oder 3, die mindestens einen Satz zweiter Schienen (504) umfasst, wobei jeder Satz ein Paar zweiter Schienen (504) umfasst, die verschiebbar an den mindestens zwei ersten Schienen (502) montiert sind, wobei jedes Paar zweiter Schienen (504) durch mehrere Trennelemente voneinander beabstandet und zum Aufnehmen mindestens einer weiteren Hebevorrichtung konfiguriert ist, die für die Verwendung an einem Doppelschienensystem konfiguriert ist.

5. Modulare Baugruppe (100) nach einem der vorherigen Ansprüche, die ferner Fundamentschienen (202) umfasst, die zum Zulassen einer Bewegung der Baugruppe (100) konfiguriert sind, wobei optional jeder Portalrahmen (102) von einem Drehgestell getragen wird, wobei jedes Drehgestell zum verschiebbaren Montieren auf einer der Fundamentschienen (202) konfiguriert ist.

6. Modulare Baugruppe (100) nach Anspruch 5, wobei die Baugruppe zwei Teile umfasst, wobei jedes Teil mehrere Portale (102) umfasst, wobei jedes Teil unabhängig auf den genannten Fundamentschienen (202) verschiebbar ist, so dass die Teile nach der Montage geteilt werden können.

7. Modulare Baugruppe (100) nach einem der vorherigen Ansprüche, wobei die modulare Baugruppe (100) mindestens zwei Randschienensysteme (700) umfasst, wobei jedes Randschienensystem (700) neben einem jeweiligen Rand der Baugruppe (100) angeordnet ist.

8. Modulare Baugruppe (100) nach einem vorherigen Anspruch, die ferner mindestens eine Hebevorrichtung umfasst, die an der mindestens einen zweiten Schiene (504) verschiebbar montiert ist.

9. Modulare Baugruppe (100) nach einem vorherigen Anspruch, wobei die vormontierten Einheiten (210) der Portalrahmen (102) aus Traversen gebildet sind.

10. Modulare Baugruppe (100) nach einem vorherigen Anspruch, die ferner mehrere Endtraversen (108) umfasst.

11. Modulare Baugruppe (100) nach einem vorherigen Anspruch, wobei die mehreren Portale (102) mindestens zwei unterschiedliche Höhen aufweisen.

12. Modulare Baugruppe (100) nach einem vorherigen Anspruch, wobei die Paneele aus einem thermischen Gewebe gebildet sind, wobei das thermische Gewebe optional ein PVC-beschichtetes Polyester ist.

13. Verfahren zum Montieren der modularen Baugruppe (100) nach einem der Ansprüche 1 bis 12, wobei das Verfahren die folgenden Schritte beinhaltet:
Positionieren mehrerer Hubrahmen;
Bereitstellen mehrerer vormontierter Einheiten (210) und Verwenden der genannten Hubrahmen zum synchronen Aufbauen mehrerer Portalrahmen (102) aus den vormontierten Einheiten (210), wobei jeder Portalrahmen zwei Säulen (104) und einen Dachträger (106) umfasst;
Montieren von mindestens zwei ersten Längsschienen (502) an mindestens einem Dachträger (106);
verschiebbares Montieren von mindestens einer zweiten Querschiene (504) an den mindestens zwei ersten Schienen (502) :
verschiebbares Montieren mindestens einer Hebevorrichtung an mindestens einer zweiten Schiene (504);
Montieren mehrerer aufgerollter Paneelen aus einem flexiblen Material auf dem Portalrahmen (102); wobei die Montageschritte nach dem Verbinden der Dachträger (106) mit den jeweiligen Säulen (104) und vor dem Aufbauen der Säulen (104) auf die erforderliche Höhe stattfinden; und
das Verfahren **dadurch gekennzeichnet ist, dass** es ferner die folgenden Schritte beinhaltet:
Montieren mindestens eines Randschienensystems neben einem Rand der Baugruppe, das Folgendes beinhaltet:
Montieren von mindestens zwei dritten Längsrandschienen an mindestens einem der Dachträger;
verschiebbares Montieren mindestens einer vierten Querrandschiene an den mindestens zwei dritten Schienen, um ein Randschienensystem zu bilden; und
verschiebbares Montieren der genannten mindestens einen Hebevorrichtung an der mindestens einen vierten Schiene,
wobei die mindestens eine vierte Schiene zum Ausrichten mit mindestens einer zweiten Schiene konfiguriert ist, um die Übertragung der genannten mindestens einen Hebevorrichtung zwischen der mindestens einen zweiten Schiene und der mindestens einen vierten Schiene zu ermöglichen.

14. Verfahren nach Anspruch 13, das das Bereitstellen von Fundamentschienen, die zum Zulassen einer Bewegung der Baugruppe konfiguriert sind, wobei die modulare Baugruppe (100) neben der Baustelle zusammengebaut und dann entlang der Schienen zur Baustelle geschoben wird, wobei der Schritt des Positionierens der mehreren Hubrahmen (204) das Rollen der genannten Hubrahmen (204) entlang der genannten Fundamentschienen (202) beinhaltet.

15. Verwendung einer modularen Baugruppe (100) nach einem der Ansprüche 1 bis 14, wobei die modulare Baugruppe (100) eine Produktionsstätte vor Ort für den Bau eines Bauwerks bereitstellt.

## Revendications

1. Ensemble modulaire (100) destiné à enfermer complètement un chantier durant la construction d'une structure,
l'ensemble modulaire (100) comprenant :
une pluralité de portiques (102), chaque portique (102) comprenant deux colonnes (104) et une poutrelle de toit (106), chaque colonne (104) et poutrelle de toit comprenant une pluralité d'unités préassemblées (210) ;
un cadre autoélévateur (204) pour chaque colonne (104) ;
au moins deux premiers rails longitudinaux (502), chacun des premiers rails (502) étant monté sur au moins une des poutrelles de toit (106) ;
au moins un deuxième rail transversal (504) monté de manière coulissante sur les au moins deux premiers rails (502) ; et
une pluralité de panneaux (110) d'un matériau souple configurés pour fournir une enceinte complète du chantier et montés au-dessus de la poutrelle de toit (106) ;
dans lequel, le ou chaque second rail (504) est configuré pour recevoir de manière coulissante au moins un dispositif de levage (602) ;
dans lequel, les unités préassemblées (210) sont configurées pour être raccordées sur chantier, et soulevées à l'aide desdits cadres autoélévateurs (204), pour former les portiques (102), et dans lequel chaque premier rail (502), et le ou chaque deuxième rail (504) sont configurés pour être montés sur les portiques (102) sur le chantier ;
l'ensemble modulaire étant **caractérisé en ce qu'**il comprend en outre au moins un système de rails de bord (700) monté adjacent à un bord de l'ensemble (100), le ou chaque système de rails de bord (700) comprenant :
au moins deux troisièmes rails de bord longitudinaux (702, 704), chacun des troisièmes rails (702, 704) étant monté sur au moins une des poutrelles de toit (106) ;
au moins un quatrième rail de bord transversal (706) monté de manière coulissante sur les au moins deux troisièmes rails (702, 704) pour former un système de rails de bord (700) et configuré pour recevoir de manière coulissante ledit au moins un dispositif de levage (602), ledit au moins un quatrième rail (706) étant configuré pour être aligné avec ledit au moins un deuxième rail (504) pour permettre le transfert dudit au moins un dispositif de levage (602) entre l'au moins un deuxième rail (504) et l'au moins un quatrième rail (706).

2. Ensemble modulaire (100) selon la revendication 1, dans lequel chaque dit premier rail (502) est monté sur une pluralité de poutrelles de toit (106).

3. Ensemble modulaire (100) selon la revendication 1 ou 2, dans lequel lesdits au moins deux premiers rails (502) sont montés de telle sorte que la distance entre les centres respectifs desdits premiers rails (502) soit d'environ 10 m à environ 20 m.

4. Ensemble modulaire (100) selon la revendication 1, 2 ou 3, comprenant au moins un ensemble de deuxièmes rails (504), chaque ensemble comprenant une paire de deuxièmes rails (504) montés de manière coulissante sur les au moins deux premiers rails (502), dans lequel chaque paire de deuxièmes rails (504) est espacée par une pluralité d'éléments de séparation et configurée pour recevoir au moins un dispositif de levage supplémentaire configuré pour être utilisé sur un système à double rail.

5. Ensemble modulaire (100) selon l'une quelconque des revendications précédentes, comprenant en outre des rails de fondation (202) configurés pour permettre un mouvement de l'ensemble (100), facultativement, dans lequel chaque portique (102) est porté par un bogie, chaque bogie étant configuré pour être monté de manière coulissante sur l'un desdits rails de fondation (202).

6. Ensemble modulaire (100) selon la revendication 5, dans lequel l'ensemble comprend deux parties, chaque partie comprenant une pluralité de portails (102), chaque partie étant coulissable indépendamment sur lesdits rails de fondation (202) de telle sorte que les parties puissent être divisées une fois assemblées.

7. Ensemble modulaire (100) selon l'une quelconque des revendications précédentes, dans lequel l'ensemble modulaire (100) comprend au moins deux systèmes de rails de bord (700), chaque système de rail de bord (700) étant disposé adjacent à un bord respectif de l'ensemble (100).

8. Ensemble modulaire (100) selon l'une quelconque des revendications précédentes, comprenant en outre au moins un dispositif de levage monté de manière coulissante sur l'au moins un deuxième rail (504).

9. Ensemble modulaire (100) selon l'une quelconque des revendications précédentes, dans lequel les unités préassemblées (210) des portiques (102) sont formées à partir de fermes.

10. Ensemble modulaire (100) selon l'une quelconque des revendications précédentes, comprenant en outre une pluralité de fermes d'extrémité (108).

11. Ensemble modulaire (100) selon l'une quelconque des revendications précédentes, dans lequel la pluralité de portails (102) présente au moins deux hauteurs différentes.

12. Ensemble modulaire (100) selon l'une quelconque des revendications précédentes, dans lequel les panneaux sont formés à partir d'un tissu thermique, éventuellement, dans lequel le tissu thermique est un polyester enduit de PVC.

13. Procédé d'assemblage de l'ensemble modulaire (100) selon l'une quelconque des revendications 1 à 12, le procédé comprenant les étapes suivantes :
le positionnement d'une pluralité de cadres autoélévateurs ;
la fourniture d'une pluralité d'unités préassemblées (210) et l'utilisation desdits cadres autoélévateurs pour construire de manière synchrone une pluralité de portiques (102) à partir des unités préassemblées (210), chaque portique comprenant deux colonnes (104) et une poutrelle de toit (106) ;
le montage d'au moins deux premiers rails longitudinaux (502) sur au moins une poutrelle de toit (106) ;
le montage de manière coulissante d'au moins un deuxième rail transversal (504) sur les au moins deux premiers rails (502) ;
le montage de manière coulissante d'au moins un dispositif de levage sur au moins un deuxième rail (504) ;
le montage d'une pluralité de panneaux enroulés d'un tissu flexible par-dessus le portique (102) ; dans lequel les étapes de montage ont lieu après que les poutrelles de toit (106) sont raccordes aux colonnes respectives (104), et avant que les colonnes (104) ne soient construites à la hauteur requise ; et
le procédé étant **caractérisé en ce qu'**il comprend en outre les étapes suivantes :
le montage d'au moins un système de rails de bord adjacent à un bord de l'ensemble, comprenant :
le montage d'au moins deux troisièmes rails de bord longitudinaux sur au moins une des poutrelles de toit ;
le montage de manière coulissante d'au moins un quatrième rail de bord transversal sur les au moins deux troisièmes rails pour former un système de rails de bord ; et
le montage de manière coulissante dudit au moins un dispositif de levage sur l'au moins un quatrième rail,
dans lequel, l'au moins un quatrième rail est configuré pour être aligné avec au moins un deuxième rail pour permettre le transfert dudit au moins un dispositif de levage entre l'au moins un deuxième rail et l'au moins un quatrième rail.

14. Procédé selon la revendication 13, comportant la fourniture de rails de fondation configurés pour permettre un mouvement de l'ensemble, dans lequel l'ensemble modulaire (100) est assemblé adjacent au chantier de construction puis coulissé le long des rails jusqu'au chantier, dans lequel l'étape de positionnement de la pluralité de cadres autoélévateurs (204) comprend le roulement desdits cadres autoélévateurs (204) le long desdits rails de fondation (202).

15. Utilisation d'un ensemble modulaire (100) selon l'une quelconque des revendications 1 à 14, l'ensemble modulaire (100) fournissant une usine foraine pour la construction d'une structure.
